(19) Europäisches Patentamt

European Patent Office

Office européen des brevets

(11) Publication number: **0 169 057 B1**

# EUROPEAN PATENT SPECIFICATION

(45) Date of publication of patent specification: **08.05.91**

(21) Application number: **85305067.2**

(22) Date of filing: **16.07.85**

(51) Int. Cl.⁵: **G01V 9/00,** G01N 1/22,
G01N 33/00

(54) Method and apparatus for detecting a contraband substance.

(30) Priority: **17.07.84 CA 459090**
**04.06.85 US 741052**

(43) Date of publication of application:
**22.01.86 Bulletin 86/04**

(45) Publication of the grant of the patent:
**08.05.91 Bulletin 91/19**

(84) Designated Contracting States:
**BE DE FR GB NL**

(56) References cited:
**US-A- 3 768 302          US-A- 3 942 357**
**US-A- 3 998 101          US-A- 4 045 997**
**US-A- 4 202 200          US-A- 4 478 096**
**US-A- 4 580 440**

(73) Proprietor: **BRITISH AEROSPACE PUBLIC
LIMITED COMPANY
100 Pall Mall
London SW1Y 5HR(GB)**

(72) Inventor: **Reid, Neil M.
35 Idelswift Drive
Thornhill Ontario, L4J 1K9(CA)**
Inventor: **Davidson, William R
122 Glen Cameron Road
Thornhill Ontario, L3P 1P8(CA)**

(74) Representative: **Ford, Michael Frederick et al
MEWBURN ELLIS & CO. 2/3 Cursitor Street
London EC4A 1BQ(GB)**

## Description

This invention relates to method and apparatus for detecting contraband such as drugs, alcohol, firearms and explosives in containers.

## BACKGROUND OF THE INVENTION

Much cargo is presently carried in cargo containers. Such cargo containers can be quite large (from 10 feet to 50 feet or 3 to 15.2 metres in length or more). When such containers are unloaded from ships, rail cars or aircraft, at ports of entry into a country, they should in theory be inspected by customs authorities. However, because the volume of such container traffic is high, and because each container may be loaded with sealed boxes, drums and the like, it is impossible in practice to inspect the contents of each container. In fact, because of the high volume of such traffic, there may be only a few minutes available to inspect each container.

X-ray examination of such containers has been proposed. Such x-ray examination is capable of detecting certain types of contraband, such as firearms, but it is not capable of detecting other kinds of contraband, such as drugs, alcohol and explosives if such substances are appropriately packaged.

Attempts have therefore been made to detect contraband such as drugs, alcohol, firearms and explosives by other means, such as by detecting vapors emitted by these items. However, these methods have resulted in high false alarm rates and unreliable detection of the substances, for various reasons, Among the reasons are the extremely low vapor pressures of many of the substances which are to be detected. In addition, although many contraband substances emit vapors from their break down products or from products associated with their manufacture, such vapors may also be emitted by other industrial products, resulting in false alarms. The unnecessary inspections resulting from the false alarms can, due to their frequency, cause a breakdown of the entire detection process.

US-A-4045997 discloses a device in which a person stands in an air stream and emitted vapour is carried into analytical equipment.

US-A-3768302 discloses a method and apparatus for sensing mineral deposits. Atmospheric particulates in the area are collected and vapour which has adsorbed onto them is evaporated and analysed.

## BRIEF SUMMARY OF INVENTION

The inventors have discovered that many contraband substances which are to be detected, such as drugs and explosives, and which may have extremely low vapor pressures, emit (even when packaged) particulates which then are present in the cargo container in which such contraband is being transported. The particulates are emitted in various ways. When the contraband is not wrapped the particulates may be emitted through simple mechanical abrasion. When the contraband is packaged, particulates may be emitted through pin holes in the packaging in which the contraband is wrapped, or they may be present on the packaging because the person who wrapped the contraband touched the packaging after touching the contraband. Alternatively, they may be present on the packaging because of a dusty environment in the location where the contraband was wrapped.

It has been discovered that the particulates emitted from the contraband escape into the cargo container in which the contraband is transported. Some of such particulates remain airborne within the container and some settle on surfaces in the container. Such surfaces may include the surfaces of the container itself or packages in the container. The particulates may also settle on or agglomerate with dust (i.e. other particulates) located in the container. In addition vapors emitted from the contraband are absorbed over a period of time by non-contraband particulates in the container, providing a concentration effect. Therefore it has been discovered that if the container itself is agitated prior to inspection to cause particulates therein to become airborne, and if the air in the container is then sampled and the particulates in such air collected, such particulates will frequently contain particulates from the contraband or vapors absorbed from the contraband. The collected particulates are then analyzed to detect the presence of the contraband substance. The invention therefore provides a new and unusual information channel for detecting the presence of contraband.

In one of its aspects the invention provides a method of detecting a concealed and packaged contraband substance in the contents of a container, said substance being of the kind which emits particulates of said substance, said method comprising the steps of:

(1) ensuring that at least some of said particulates present on surfaces in said container have been agitated to assist at least some of such particulates to become airborne.

(2) sucking air containing said particulates from said container and thereby collecting at least some of said particulates, said collection being without heating said particulates sufficiently to release vapour of said substance therefrom.

(3) then after collecting said particulates, rapidly heating said collected particualtes sufficiently to vaporize said particulates of said substance to produce vapor thereof, and

(4) analysing said vapour for said contraband substance.

In another aspect the invention provides apparatus for detecting a concealed and packaged substance in the contents of a container, said substance being of the kind which emits particulates, said apparatus comprising:

(1) means adapted to be connected to said container for agitating at least some of the particulates present on surfaces in said container, for causing at least some of said particulates to become airborne,

(2) collection means for collecting said particulates,

(3) means including a suction line connected to said collector means for sucking air containing said particulates in said container into said collection means to collect at least some of the particulates from said container in said collection means,

(4) means connected to said collection means and operable for rapidly heating the particulates after collection thereof to vaporize said particulates,

(5) analyser means for analysing said vapors,

(6) and means connected between said collection means and said analyser means for conveying vapors of said vaporized particulates from said collection means into said analyser means for analysis thereof.

## BRIEF DESCRIPTION OF THE DRAWINGS

The invention will be described in more detail with reference to the accompanying drawings in which:

Fig. 1 is a perspective view of a typical cargo container in which contraband may be transported;

Fig. 2 is a plan view of a typical prior art x-ray installation used to x-ray cargo containers;

Fig. 3 is a diagrammatic side view of a road arrangement to ensure agitation of truck transported containers;

Fig. 4 is a front view of a cargo container having vibration transducers connected thereto;

Fig. 5 is a diagrammatic side view of a roller conveyor having a cargo container thereon;

Fig. 6 is a diagrammatic side view of another roller having a cargo container thereon;

Fig. 7 is a diagrammatic view of a sampling line connected to a cargo container;

Fig. 8 is a diagrammatic view of a modified sampling line connected to a cargo container;

Fig. 9 is a diagrammatic view of a collector connected to the sampling line of Figs. 7 or 8;

Fig. 10 is a perspective view of a collector element;

Fig. 11 is a view of a collector connected to an analyzer;

Fig. 12 is a cross-sectional view of a typical hand held collector; and

Fig. 13 is a diagrammatic view of a mass analyzing system used in connection with the method of the invention.

## DETAILED DESCRIPTION OF PREFERRED EMBODIMENTS OF THE INVENTION

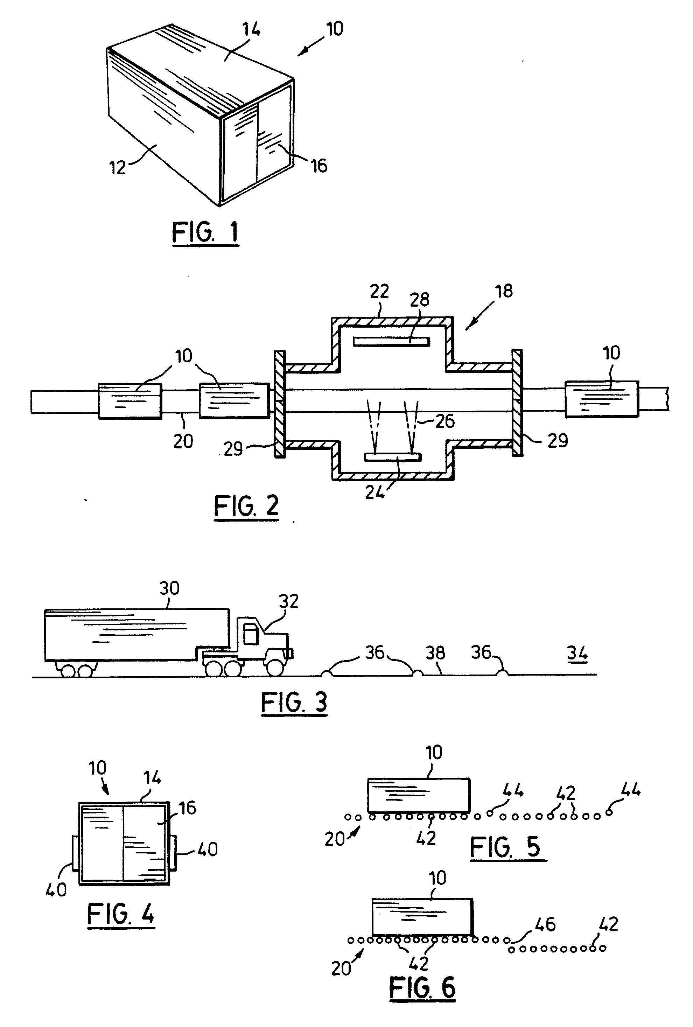

Reference is first made to Fig. 1, which shows a typical cargo container 10 having sides 12, a top 14 and doors 16 located at one end thereof. The cargo container 10 may be a standard forty foot (12.2 metre) container of the kind transported by ship and then by truck or rail from the port at which the ship loads or unloads, or it may be an air cargo container, or it may simply be a large use. Such containers may be used to carry contraband such as drugs, alcohol, firearms or explosives. Because of the high volume of traffic in such containers, it is not practical to unload and inspect the contents of each container.

High energy x-ray facilities have been proposed to x-ray such containers. A typical such high energy x-ray facility is shown at 18 in Fig. 2. As there shown, the containers are transported on a conveyor 20, which may be a belt conveyor or a roller conveyor, through a thick-walled concrete building 22. In the building 22 an x-ray source 24 transmits high energy x-rays 26 through the container 10 to an imaging device 28. The imaging device transmits to a screen (not shown), the image produced by the x-rays, so that the operator may view the image and detect the presence of certain kinds of contraband. Thick radiation proof doors 29 seal the x-ray source during the x-ray process to prevent escape of dangerous x-rays.

The high energy x-ray facility 18 can detect the presence of certain objects, such as firearms, even through relatively thick metal walls. However, it is not capable of detecting contraband such as explosives and drugs when these are appropriately packaged. The applicant's invention is particularly suited to be used in combination with the x-ray facilities shown, particularly trailer of the kind pulled by truck tractors for highway when the conveyor 20 is adapted to agitate the container 10 as will be described.

Restricted drugs such as heroin and cocaine are usually transported in the form of their salts, typically hydrochloride or sulphate salts. These salts have an extremely low vapor pressure, which may be as low as $10^{-7}$ torr. Cannabis and many explosives have a similarly low vapor pressure. If the vapor from small quantities of such contraband substances were to be detected in a container, it would be necessary to sample the air in the container at least for several hours, if not more, and then to concentrate that air to obtain a sufficiently large quantity of the contraband vapor for detection.

Many types of contraband substances emit more volatile breakdown or related products. For example, explosives may emit cyclohexanone, which is a solvent used during the manufacturing process. Heroin may emit vapors of acetone (a solvent used therein) and acetic acid (a breakdown product of heroin) or of caffeine, which is a "cutting" agent used in heroin. Cocaine may emit vapors of acetone (a solvent) or methylbenzoate (a breakdown product) or of lidocaine (a "cutting" agent used in cocaine). Cannabis may emit pinene or sesquiterpenes, which are volatile non-active ingredients thereof. Table I at the end of this description lists these chemical or contraband signatures and shows their relative volatilities.

Unfortunately many of the vapors of the materials listed in Table I may also be emitted by other commercial materials, resulting in a high false alarm rate. In addition, the vapor pressure of many of the substances is extremely low. In addition, the vapor pressure of all substances falls when the temperature is relatively low.

As previously mentioned, it is found that most contraband substances (except of course for liquids) emit particulates. This is partly because virtually all packaging contains microscopic pinholes through which the particulates may pass, and partly because of contamination of the substance on the packaging itself. The contamination on the packaging may result from various factors, e.g. the person who wrapped the contraband may have touched the contraband and then the packaging, or airborne contraband particles at the wrapping location may have settled on the packaging, or non-contraband dust particles at the wrapping location which may have absorbed and concentrated vapors from the contraband may have settled on the packaging. In addition the contraband substance (including liquids) while in the container may emit vapors, both of its active ingredient and of other characteristic products associated with it, although often at very low pressures. These vapors usually diffuse through the packaging in which the contraband is located.

Most cargo containers contain dust, i.e. particulates, of various kinds. The dust particles may for example be fibrous (e.g. lint from paper, cardboard, cloth, and the like), silicacious (e.g. sand and rock dust) and carbonaceous (e.g. soot, skin particles and the like). Many of these dust particles act as good natural absorbers of the vapor emitted by the contraband. In addition many natural dust particles are relatively sticky and may tend to agglomerate with particulates of the contraband itself.

The particles of interest may range in use from $10^{-7}$ meters to $2 \times 10^{-6}$ meters (smoke particles) and from $2 \times 10^{-6}$ meters to $10^{-3}$ meters (airborne dust particles) and even larger for such particles as lint.

The time between when a cargo container is loaded and when it must be inspected is usually at least a day or several days and can be much more. This allows considerable time for the dust particles in the container to absorb and in effect to concentrate vapors from contraband in the container. It also allows considerable time for particulates of the contraband to be emitted and to float within or settle on surfaces within the cargo container.

As the container experiences its voyage, the resultant vibration may increase the number of natural particles available to act as absorbers and also increases the number of contraband particles emitted. The vibration also causes more even distribution of all these particles within the container. Temperature changes within the container, caused by heating and cooling as the ambient environment changes, also increase the distribution and mobility of particles within the container.

Therefore, according to the invention particulates in the container are collected and analyzed for the presence of contraband. The particulates are collected by sampling the air within the container. To ensure that a sufficient quantity of particulates is collected, the container is agitated immediately or at least shortly prior to sampling the air therein.

The agitation may be performed in several ways. If the container 10 is the trailer 30 (Fig. 3) of a tractor-trailer combination 32 which has been driven to the sampling location 34, then frequently no additional agitation will be required since considerable agitation occurs during the driving process. However, if necessary, a bumpy road surface or "speed bumps" 36 may be provided in the portion of the road 38 over which the trailer must be driven as it travels to the inspection location.

4

Alternatively, a vibrating device 40 (Fig. 4) may be placed against the sides or top of the container 10 to vibrate the container. The vibrating device 40 may be an ordinary direct mechanical vibrator or may be a sonic or ultrasonic transducer, to agitate the contents of the container. If desired two such vibrating devices 40 may be used, one placed against each side of container 10 and preferably near the bottom of the container, to maximize the vibration accelerations applied to the cargo and other surfaces within the container.

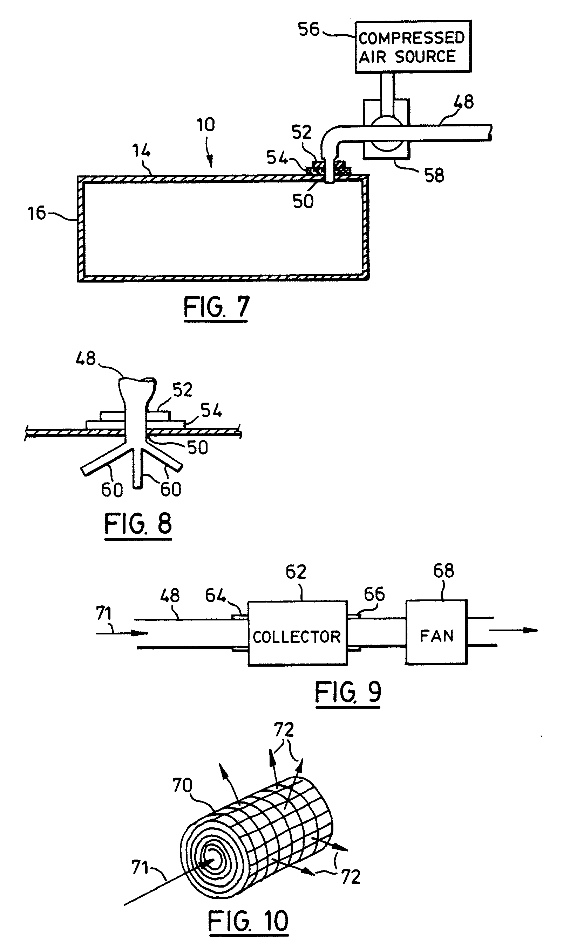

If the container 10 is travelling on a roller conveyor such as that shown at 20 in Fig. 2, then the rollers 42 (Fig. 5) of the conveyor may be staggered as shown in exaggerated form at 44 or may be made of different diameters, to bump the container immediately prior to its movement into the air sampling location 34. Sufficient propulsive force (either by gravity or by powered rollers) is provided to ensure continued movement of the container 10. Alternatively, the conveyor 20 may contain a small drop indicated at 46 in Fig. 6 so that the container actually falls several inches to stir up the dust within the container.

The air within the container 10 is sampled through a sampling line 48 as shown in Fig. 7. To perform the sampling, a hole 50 is bored in the roof of the container and the sampling line 48 inserted therethrough. Typically a two-inch (5 cm) hole will be bored through the container roof 14 and the sampling line 48 will include a collar 52 and a foam seal 54 beneath the collar 52. The collar and seal are pressed against the outside of the container roof 14 adjacent the hole 50, to seal the hole around the sampling line 48 against movement of air therethrough. After the sampling has been completed and the sampling line is removed, a plug (not shown) is fitted into the hole 50 to seal it. The plug may contain a valve so that when the container is next inspected, the sampling line 48 can simply be connected to the valve.

If desired, instead of or in addition to mechanically vibrating the container, a blast of high-pressureair may be injected through the sampling line 48 from a source 56 of compressed air, directed through a valve 58, in order to agitate dust within the container. Alternatively, a separate high pressure air line may be inserted into the hole 50 to agitate dust, such line can then be removed and replaced by the sampling line. However this is not preferred because of the potential for particle loss during the disconnect-connect cycle.

As shown in Fig. 7, the hole 50 is bored and the sampling line 48 is inserted into the container 10 at a location remote from the doors 16. Doors are a prime source of air leakage into the container. When the sampling line 48 is placed as far as possible from the doors, and air is sucked into the sampling line, a flow of air is set up through the container from the doors to the sampling line, carrying dust in the container with such flow.

Where the container is an open-backed or tarpaulin covered truck body, high pressure air from a compressed air source may be injected into one end of the container at the same time as an air sample is being withdrawn from the other end of the container, in order to set up a better air flow containing particulates. Where the container is a closed cargo container, its doors may nevertheless have sufficient gaps at their seals so that an air hose can be pressed against or through such gaps, or through the rubber seals around the gaps, to inject air during the sampling process.

If desired, in order to improve the distribution of air collection within the container, the sampling line may contain tentacles 60 as shown in Fig. 8. The tentacles 60 tend to fan out when the sampling line is inserted through the hole 50. The tentacles 60 will normally be relatively short and may include an expansion mechanism (not shown) so that they are directed in different directions as they move below the roof of the container. There is usually a space of at least six to twelve inches (15 to 30 cm) between the roof of a container and the top of the cargo therein to allow space for such tentacles.

The sampling line 48 typically extends to a sample collector 62 as shown in Fig. 9. Air is drawn from line 48 into an inlet 64 of the collector and through collector outlet 66 to atmosphere by an air pump 68.

The line 48 will often be of a substantial length. When vapors are being detected, it has been found that molecules of a medium molecular weight compound can lose 50% or more of their number in a line 48 of between 5 and 10 meters in length. These molecules tend to diffuse rapidly to the walls of the line 48 where they are held by molecular binding forces. This loss not only reduces the signal to be analyzed but also causes undesirable memory effects since molecules which are absorbedor trapped on the walls of line 48 may be released at inopportune times. (To reduce but not eliminate this problem, the walls of line 48 may be heated.) The inventors have however discovered that particulates will travel much further along a line, even an unheated line, with much lower losses than molecules. The particulate losses in a 10 meter line are minor and even a 100 meter long line 48 can be used if needed. The particulate losses are lower because the particulates diffuse much more slowly than do molecules to the walls of the line 48. Those particulates which do reach the walls of the line 48 are more likely than molecules to be dragged off the walls because of the greater projection of the particulates into the shear layer adjacent the wall. This enables the collector system to be described to be at a greater distance from the container where necessary. Since it is often difficult to bring sophisticated equipment close to the container being inspected, this aids the establishment of a practical inspection system. At the same time undesirable memory effects in the line 48 are avoided.

Preferably the diameter of line 48 is increased immediately outside the hole 50, e.g. to between four inches and eight inches. Air is sucked through the line 48 at the maximum possible flow rate, both to obtain the largest possible quantity of particulates, and to reduce the likelihood that particulates will settle in the line 48.

The line 48 should be smooth walled, without sharp bends or sudden sharp expansions or contractions, all of which tend to trap particles. Preferably no bend should be sharper than about five times the internal diameter of the line 48. Preferably the bends should be ten internal line diameters or more. In addition, at those locations where the internal diameter of the line is increased, the increase in internal diameter preferably should not be at a rate greater than about a 7 degree half angle cone. With more abrupt expansions, the flow in the line is more likely to separate from the line wall and form a turbulent region with backflow, which can cause settling and undesired memory effects. Contractions in the internal diameter of the line do not normally cause flow separation and can be more abrupt but should be smoothly contoured and moderately gradual. Further, the roughness of the internal surface of the wall of line 48 should preferably not be greater than about 1% of the internal line diameter. The line 48 may be made from the plastic known under the trade mark TEFLON and may be heated if trace vapors are also to be conducted through the line.

The collector 62 performs the function of collecting, i.e. trapping particulates located in the air stream entering the collector. This can be accomplished in various ways. For example the collector 62 may be a conventional cyclone. Alternatively, it may be a rolled coil 70 of wire mesh as shown in Fig. 10. The air stream 71 in the line 48 enters the center of the coil 70 and travels radially therethrough as indicated by arrows 72 (much like an automobile air filter). The wire mesh coil 70 is coated with an appropriate sticky substance such as a light oil. Particulates in the air stream are collected on the sticky wire surfaces of the collector during the air sampling process. Other forms of collector may also be used.

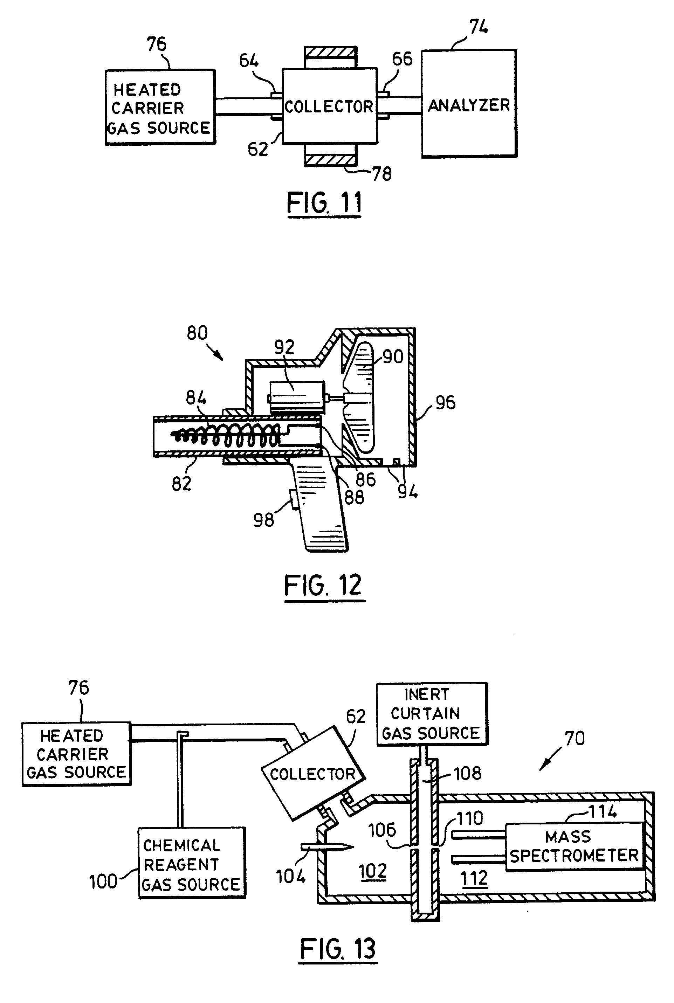

After the particulates have been collected, the collector 62 (which can preferably be quickly plugged into and unplugged from line 48) is removed from line 48 and connected to an analyzer 74 (Fig. 11) to be described. A source 76 of heated inert carrier gas is plugged into the collector inlet 64. In addition the collector 62 itself can be heated by a heater, for example an induction heater 78. This process rapidly releases vapors absorbed by the trapped particulates and vaporizes those particulates which are particulates of the contraband substance itself. The vapors are carried in a short period of time (e.g. 30 seconds) into the analyzer 74 for analysis. The heating is controlled so as not to destroy the oil coating on the mesh coil 70.

The oil referred to above should be an oil of low volatility when heated and one which does not oxidize when heated. If appropriate oils are used, the compounds of interest may dissolve from the particulates into the oil, which acts as a solvent, and are then evaporated from the oil into the heated carrier gas stream. Stationary phase oils or gums used in conventional gas chromatography columns have been found suitable. These oils are generally organo-silicone polymers or other non-volatile organic polymers. For example an organo-silicon polymer oil sold under the designation OV-275 by several suppliers, including Alltech Associates of Deerfield, Illinois, U.S.A. has been found particularly suitable for explosives. A similar oil sold under the designation OV-17 by the same suppliers has been found particularly suitable for cocaine and heroin.

Because the release of vapor from the particulates and the movement of the resultant vapor into the mass analyzer occurs in a shorter time than the step of collecting the particulates, and because the volume of vapor released into the mass analyzer is much smaller than the volume of air collected, a large concentration effect is achieved. For example, if 100 cubic litres of air per second are collected from the container for 30 to 60 seconds, then 3000 to 6000 litres of air are collected. If the carrier gas flow from the collector 62 to the analyzer 74 is 0.1 litres per second for 10 seconds (1 litre), then a very large concentration effect is achieved, dependent of course in part on the efficiency with which particulates are collected. A further concentration effect is achieved because of the collection both of particulates ambient in the container which have had a long time to absorb contraband volatiles, and of particulates of the contraband itself which have had a long time to migrate about the container.

If desired a hand held collector may be used in place of or in addition to the collector 62 and sampling line 48. The hand held collector may be for example of the kind shown at 80 in Fig. 12. Collector 80 includes a removable glass tube 82 having a spiral wound wire collector coil 84 therein having two contacts 86, 88. Air is sucked into tube 82 by a fan 90 driven by a motor 92, and exits through holes 94 in casing 96. The motor 92 is driven by batteries (not shown) and is turned on by a trigger switch 98. Thus the collector 80 can be brought to a container or trailer which is to be inspected more closely. After a sample has been collected, tube 82 with the coil 84 therein is removed and plugged into the analyzer 74 like the collector 62. However a source of electrical current (not shown) may be connected to contacts 86, 88 to heat the wire coil 84 like a filament, to drive off vapors absorbed by particulates, or vaporize particulates, trapped in the coil.

The analyzer 70 may be a mass analyzer such as that sold under the trade mark TAGA by Sciex Division of MDS Health Group Limited of Thornhill, Ontario, Canada, as shown in Fig. 13. Typically the heated carrier gas from source 76 will be directed past a chemical reagent gas source 100 and a mixture of both gases will travel through the collector 62 into the inlet section 102 of the analyzer 70 for ionization. The inlet section 102 will include an ionizing source such as a corona discharge needle 104 which provides a corona discharge to ionize trace substances of interest. The resultant ions are then pulled by an electric field through an orifice 106 into a gas curtain chamber 108 and then through another orifice 110 into a vacuum chamber 112 where they enter a mass spectrometer 114.

The gas curtain section 108, described in U.S. patent 4,023,398 issued on May 13, 1977 to J.B. French et al, provides an inert curtain gas (such as argon) which effuses from orifice 106 into chamber 102, i.e. counter-current to the flow of ions into the orifice 106. The curtain gas thus prevents particulates from entering and clogging the orifices 106, 110 and allows only the ions to travel into the vaccum chamber 112. The curtain gas enters the vacuum chamber 112 and may be cryopumped or pumped by an ordinary vacuum pump to establish a vacuum in chamber 112. The gas curtain is particularly useful in the present invention since the gas flow into the analyzer tends to be particulate laden (which is the opposite of what is normally desired) because of particulates carried out of the collector and into the analyzer.Such particles would rapidly clog an unprotected orifice.

The method of the invention may also be used with substances such as alcohol which do not emit particulates. Where there are very small quantities of vapor present, the absorption of such vapor by particulates in the container over a period of days provides a concentration effect which increases the reliability of detection when the method of the invention is used. However the invention is primarily applicable to the detection of contraband substances which emit particulates.

Although the steps of collecting the particulates and then heating them have been shown as discrete batch-type steps, if desired a continuous process can be used in which the collected particulates are continuously advanced to a heating location and heated to desorb absorbed vapors.

It has been found that the following approximate temperatures are optimum for desorption of selected target contraband compounds from the collected particulates.

| Compound | Approximate Optimum Desorption Temperature (°C) |
|---|---|
| Heroin hydrochloride (a common salt of heroin and the form in which heroin is commonly transported) | 275 |
| Cocaine hydrochloride (a common salt of cocaine and the form in which cocaine is commonly transported) | 250 |
| Methamphetamine hydrochloride (a common example of the many amphetamines) | 250 |
| Tetrahydrocannabinol (the active ingredient in cannabis) | 250 |
| Nitroglycerine | 175 |
| RDX (a plastic explosive commonly sold under the trade mark CYCLONITE and having a chemical formula consisting of a ring of six atoms, namely three carbon atoms each separated from the adjacent carbon atom by a nitrogen atom, each nitrogen atom having an $NO_2$ group attached thereto) | 250 |
| TNT (trinitrotoluene) | 200 |
| PETN (the acronym for a plastic explosive known as pentaerythritol tetranitrate) | 225 |

The above approximate optimum temperatures are those at which the vapors have been found best to be released from the collected particulates. If a significantly lower temperature is used, some of the adsorbed vapors will not be desorbed in the heating process or the particulates (if of the target substance itself) will not vaporize. If a significantly higher temperature is used, the particulates or the desorbed vapors or both may break down into other substances, which is highly undesirable. However there is a tolerance of approximately + or -15° C in the approximately optimum desorption temperatures given.

In order that the particulates with their adsorbed vapors may be properly collected, it is desirable that the collector 62 not be unduly warm during the collection process (i.e. before the collected particulates are heated). Preferably the temperature of the particulates collected at the collector 62 should not exceed about 40° C before the collector is heated to desorb vapors from the particulates, and desirably such temperature is below about 30° C.

The term "container" as used herein is meant to include any kind of container in which contraband may be transported, including without limitation cargo containers, trailers, trucks, autos, aircraft, luggage, trunks, boxes, letters and other mail. In the case for example of some luggage and other resilient containers, air may be sampled from the luggage container simply by compressing the luggage container.

EP 0 169 057 B1

## TABLE I

### CHEMICAL OR CONTRABAND SIGNATURES

| CONTRABAND | VOLATILE COMPONENTS | | SOURCES OF PARTICULATES |
|---|---|---|---|
| | HIGH VOLATILITY | LOW VOLATILITY | |
| | (approximately $10^6$ dynamic range from left to right) | | |
| **EXPLOSIVES** | | | |
| INDUSTRIAL | EGDN (ethylene glycol dinitrate) | NG (nitroglycerine) | Microscopic particles of EGDN and NG produced during manufacture and packaging and dust particles contaminated by NG and/or EGDN. |
| MILITARY | CYCLOHEXANONE (Solvent used in plastic explosives) | DNT (dinitrotoluene)    TNT (trinitrotoluene) | Microscopic particles of TNT and DNT and contaminated dust particles. |
| **DRUGS** | | | |
| COCAINE | ACETONE   METHYLBENZOATE (solvent)   (breakdown product) | LIDOCAINE   COCAINE ("cutting" agent)   (base) | Microscopic particles of Cocaine hydrochloride, the common salt form, Cocaine base and Lidocaine and contaminated dust particles. |
| HEROIN | ACETONE   ACETIC ACID (solvent)   (breakdown product) | CAFFEINE ("cutting agent) | Microscopic particles of Heroin hydrochloride and/or sulphate, the common salt forms, and Caffeine and contaminated dust particles. |
| SPEED (amphetamines) | DIMETHYLAMPHETAMINE (active compound) | | Dust particles contaminated with dimenthylamphetamine. |
| CANNABIS | PINENE, SESQUITERPENES (non-active ingredients) | TETRAHYDROCANNABINOL (active compound) | Microscopic particles of Tetrahydrocannabinol Cannabadiol and Cannabinol and contaminated dust particles. |
| BARBITUATES | | | Microscopic dust particles of Barbital and Barpental. |
| **ALCOHOL** | | | |
| SPIRITS WINES BEERS | ETHANOL   ACETIC ACID (alcohol)   (breakdown product) | | No particles of a direct nature. |

## Claims

1. A method of detecting a concealed and packaged contraband substance in the contents of a container, said substance being of the kind which emits particulates of said substance, said method comprising the steps of:

   (1) ensuring that at least some of said particulates present on surfaces in said container have been agitated to assist at least some of such particulates to become airborne,

   (2) sucking air containing said particulates from said container and thereby collecting at least some of said particulates, said collection being without heating said particulates sufficiently to release vapour of said substance therefrom,

   (3) then after collecting said particulates, rapidly heating said collected particulates sufficiently to vaporize said particulates of said substance to produce vapor thereof, and

   (4) analysing said vapour for said contraband substance.

2. A method according to claim 1 wherein said container is a freight cargo container.

3. A method according to claim 1 or claim 2 wherein said agitation is carried out by directing an air jet into said container.

4. A method according to claim 3 wherein said agitation step is performed by blowing said air jet through said suction line into said container.

5. A method according to claim 1 or claim 2 wherein said agitation is performed by dropping said container through a short distance.

6. A method according to claim 1 or claim 2 wherein said agitation is carried out by connecting a vibration transducer to said container.

7. A method according to claim 6 wherein said transducer is an ultrasonic transducer.

8. A method according to claim 1 or claim 2 wherein said agitation step is performed by agitating said container on a conveyor which simultaneously transports said container.

9. A method according to any one of claims 1 to 8 wherein said container has a door at one end and wherein said step of sucking said air is performed at a location remote from said one end.

10. A method according to any one of claims 1 to 9 wherein air is blown into said container at one location and said step of sucking said air is performed at a location remote from said one location.

11. A method according to claim 2 wherein said step of sucking air is performed by introducing into said container a said suction line having a number of tentacles at its end so that air in said container is sucked from a number of different directions into said sampling line.

12. A method according to any one of claims 1 to 11 wherein said collection step includes the step of directing air from said container over a sticky collector surface to trap said particulates on said surface.

13. A method according to claim 12 wherein said step of heating includes the step of heating said collector surface.

14. A method according to claim 1 wherein said step of sucking air is performed by sucking air at a very high flow rate through a long said suction line, said suction line having essentially no bends which have a radius less than about five times the internal diameter of the line and said suction line having no increases in internal diameter therein at a rate greater than about a 7 degree half-angle cone, and having an internal surface roughness which does not exceed about 1% of the internal diameter of the line.

15. A method according to claim 14 wherein said line is at least about 10 meters in length.

16. A method according to any one of claims 1 to 15 wherein said contraband substance is heroin.

17. A method according to any one of claims 1 to 15 wherein said contraband substance is cocaine.

18. A method according to any one of claims 1 to 15 wherein said contraband substance is cannabis.

19. A method according to any one of claims 1 to 15 wherein said contraband substance is an explosive substance.

20. A method according to claim 2 wherein said container is carried on a conveyor into a high energy x-ray examination facility and said agitation is performed by said conveyor.

21. A method according to any preceding claim wherein said step (4) is performed by flowing said released vapor together with a carrier gas into an ionizing chamber, forming ions from said released vapor, conducting said ions through a first orifice and through a gas curtain and through a second orifice into a vacuum chamber containing a mass analyzer, and causing said gas curtain to effuse from said first orifice countercurrent to the flow of said ions to prevent particulates entrained in said released vapor and said carrier gas from clogging said orifice.

22. A method according to any preceding claim wherein in said step (3) said collected particulates are heated to a temperature above $160^{\circ}$ C.

23. A method according to claim 22 wherein said substance is heroin hydrochloride and in said step (3) said collected particulates are heated to a temperature of between 260 and $290^{\circ}$ C

24. A method according to claim 22 wherein said substance is selected from the group consisting of cocaine hydrochloride, methamphetamine hydrochloride, tetrahydrocannabinol, and the plastic explosive known as RDX, and in step 3 said collected particulates are heated to a temperature of between 235 and $265^{\circ}$ C.

25. A method according to claim 22 wherein said substance is nitroglycerin and in said step 3 said collected particulates are heated to a temperature of between 160 and $190^{\circ}$ C.

26. A method according to claim 22 wherein said substance is trinitrotoluene and in said step 3 said collected particulates are heated to a temperature of between 185 and $250^{\circ}$ C.

27. A method according to claim 22 wherein said substance is pentaerythritol tetranitrate and in said step 3 said collected particulates are heated to a temperature of between 210 and $240^{\circ}$ C.

28. Apparatus for detecting a concealed and packaged substance in the contents of a container, said substance being of the kind which emits particulates, said apparatus comprising:
(1) means adapted to be connected to said container for agitating at least some of the particulates present on surfaces in said container, for causing at least some of said particulates to become airborne,
(2) collection means for collecting said particulates,
(3) means including a suction line connected to said collector means for sucking air containing said particulates in said container into said collection means to collect at least some of the particulates from said container in said collection means,
(4) means connected to said collection means and operable for rapidly heating the particulates after collection thereof to vaporize said particulates,
(5) analyser means for analysing said vapors,
(6) and means connected between said collection means and said analyser means for conveying vapors of said vaporized particulates from said collection means into said collection means into said analyser means for analysis thereof.

11

29. Apparatus according to claim 28 wherein said means for heating includes means for heating the collected particulates to a controllable temperature above 160° C dependent on the substance to be detected.

30. Apparatus according to claim 29 wherein said temperature is between 160° and 290° C.

31. Apparatus according to any of claims 28 to 30 and including agitation means for vigorously agitating said container to disturb particulates present on surfaces in said container.

32. Apparatus according to claim 31 wherein said agitation means comprises a conveyor.

33. Apparatus according to any of claims 28 to 32 wherein said analyzer means comprises an ionizing chamber, means for flowing said released vapor together with a carrier gas into said ionizing chamber, means for forming ions from said released vapor, a vacuum chamber, a gas curtain chamber between said ionizing chamber and said vacuum chamber, means for conducting said ions through a first orifice into said gas curtain chamber and through a second orifice from said gas curtain chamber into said vacuum chamber, means for causing gas in said gas curtain chamber to effuse from said first orifice countercurrent to the flow of said ions to prevent particulates entrained in said released vapor from clogging said orifices, and a mass analyzer in said vacuum chamber for analyzing said ions.

## Revendications

1. Procédé de détection d'une substance de contrebande cachée et logée dans le contenu d'un conteneur, cette substance étant du type qui émet des matières particulaires, le procédé comprenant les étapes consistant à :

1°) assurer qu'au moins certaines des matières particulaires présentes sur les surfaces dans le conteneur ont été mises en agitation pour qu'au moins une certaine quantité de ces matières particulaires puissent être mises en suspension dans l'air,

2°) aspirer l'air contenant ces substances particulaires depuis le conteneur et recueillir alors au moins une certaine quantité de ces matières particulaires, le recueil se faisant sans chauffer suffisammment ces matières particulaires pour libérer la vapeur de la substance,

3°) ensuite, après avoir recueilli les matières particulaires, chauffer rapidement les matières particulaires recueillies suffisamment pour faire évaporer les matières particulaires de la substance pour produire de la vapeur, et

4°) analyser la vapeur pour déterminer s'il s'agit d'une substance de contrebande.

2. Procédé selon la revendication 1, dans lequel le conteneur est un conteneur de marchandises ou fret.

3. Procédé selon la revendication 1 ou 2, dans lequel la mise en agitation s'effectue en dirigeant un jet d'air dans le conteneur.

4. Procédé selon la revendication 3, dans lequel l'étape de mise en agitation s'effectue en insufflant un jet d'air dans le conteneur par la conduite d'aspiration.

5. Procédé selon la revendication 1 ou 2, dans lequel la mise en agitation s'effectue en laissant tomber le conteneur à partir d'une petite hauteur.

6. Procédé selon la revendication 1 ou 2, dans lequel la mise en agitation s'effectue en branchant un transducteur de vibration sur le conteneur.

7. Procédé selon la revendication 6, dans lequel le transducteur est un transducteur à ultrasons.

8. Procédé selon la revendication 1 ou 2, dans lequel l'étape de mise en agitation s'effectue en agitant le conteneur sur un convoyeur ou transporteur qui achemine simultanément le conteneur.

9. Procédé selon l'une quelconque des revendications 1 à 8, dans lequel le conteneur comporte une porte sur une extrémité et dans lequel l'étape d'aspiration de l'air s'effectue en un emplacement éloigné de cette extrémité.

10. Procédé selon l'une quelconque des revendications 1 à 9, dans lequel de l'air est insufflé dans le conteneur en un emplacement et l'étape d'aspiration de l'air s'effectue en un emplacement éloigné de l'emplacement d'insufflation.

11. Procédé selon la revendication 2, dans lequel l'étape consistant à aspirer l'air s'effectue par introduction dans le conteneur d'une conduite d'aspiration comportant un nombre de ventouses sur son extrémité permettant d'aspirer dans le conteneur à partir d'un certain nombre de directions différentes dans la conduite d'échantillonage.

12. Procédé selon l'une quelconque des revendications 1 à 11, dans lequel l'étape de recueil comprend l'etape consistant a diriger l'air en provenance du conteneur sur une surface de collecteur adhésive pour capter les matières particulaires sur la surface.

13. Procédé selon la revendication 12, dans lequel l'étape de chauffage comprend l'étape consistant à chauffer la surface du collecteur.

14. Procédé selon la revendication 1, dans lequel l'étape consistant à aspirer l'air s'effectue en aspirant l'air à un débit très élevé par une conduite d'aspiration de grande longueur, cette conduite étant essentiellement exempte de courbures d'un rayon inférieur à environ 5 fois le diamètre intérieur de la conduite et cette conduite d'aspiration ne présentant aucune augmentation du diamètre interne dans des proportions supérieures à environ un cône de demi-angle de 7°, et comportant une rugosité de surface interne ne dépassant pas 1 % du diamètre interne de la conduite.

15. Procédé selon la revendication 14, dans lequel la conduite a une longueur d'au moins 10 mètres.

16. Procédé selon l'une quelconque des revendications 1 à 15, dans lequel la substance de contrebande est de l'héroïne.

17. Procédé selon l'une quelconque des revendications 1 à 15, dans lequel la substance de contrebande est de la cocaïne.

18. Procédé selon l'une quelconque des revendications 1 à 15, dans lequel la substance de contrebande est du cannabis.

19. Procédé selon l'une quelconque des revendications 1 à 15, dans lequel la substance de contrebande est une substance explosive.

20. Procédé selon la revendication 2, dans lequel le conteneur est transporté par un convoyeur ou transporteur jusque dans une installation de contrôle aux rayons x de forte énergie et la mise en agitation est réalisée sur le convoyeur.

21. Procédé selon l'une quelconque des revendications dans lequel l'étape 4 s'effectue en laissant s'écouler la vapeur libérée conjointement avec un gaz porteur jusque dans une chambre ionisante, à former des ions à partir de la vapeur libérée, à conduire ces ions par un premier orifice et par un rideau de gaz et par un second orifice jusque dans une chambre sous vide contenant un analyseur de masses, et faisant diffuser le rideau de gaz à partir du contre-courant du premier orifice dans la flux des ions pour empêcher que les matières particulaires entraînées dans la vapeur libérée et dans le gaz porteur ne viennent obstruer l'orifice.

22. Procédé selon l'une quelconque des revendications précédentes dans lequel à l'étape 3, les matières particulaires recueillies sont chauffées jusqu'à une température supérieure à 160° C.

23. Procédé selon la revendication 22, dans lequel la substance est du chlorhydrate d'héroïne et à l'étape 3 les matières particulaires recueillies sont chauffées jusqu'a une température située entre 260 et 290° C.

13

**24.** Procédé selon la revendication 22, dans lequel la substance est sélectionnée parmi le groupe consistant en du chlorhydrate de cocaïne, du chlorhydrate de méthamphétamine, du tétrahydrocannabinol, et l'explosif plastique connu sous l'appellation de RDX et à l'étape 3 les matières particulaires recueillies sont chauffées jusqu'à une température située entre 235 et 265° C.

**25.** Procédé selon la revendication 22, dans lequel la substance est de la nitroglycérine et à l'étape 3, les matières particulaires recueillies sont chauffées jusqu'à une température située entre 160 et 190° C.

**26.** Procédé selon la revendication 22, dans lequel la substance est du trinitrotoluène et à l'étape 3, les matières particulaires recueillies sont chauffées jusqu'à une température située entre 185 et 250° C.

**27.** Procédé selon la revendication 22, dans lequel la substance est du tétranitrate de pentaérythritol et à l'étape 3, les matières particulaires recueillies sont chauffées jusqu'à une température située entre 210 et 240° C.

**28.** Appareil destiné à détecter une substance cachée et logée ou conditionnée dans le contenu d'un conteneur, la substance étant du type qui émet des matières particulaires, l'appareil comprenant :

1°) des moyens aptes à être reliés au conteneur pour la mise en agitation au moins des matières particulaires présentes sur des surfaces dans le conteneur, pour permettre à au moins une certaine quantité de ces matières particulaires d'être mises en suspension dans l'air,

2°) des moyens de recueil pour ces matières particulaires

3°) des moyens comprenant une conduite d'aspiration raccordée aux moyens de recueil ou collecteur pour l'aspiration de l'air contenant les matières particulaires dans le conteneur pour les amener dans les moyens de recueil afin de recueillir au moins une certaine quantité des matières particulaires du conteneur dans les moyens de recueil

4°) des moyens raccordés aux moyens de recueil et pouvant être mis en action pour le chauffage rapide des matières particulaires après le recueil de celles-ci afin de faire évaporer les matières particulaires

5°) analyseur destiné à analyser ces vapeurs,

6°) des moyens raccordés entre les moyens de recueil et l'analyseur pour acheminer les vapeurs des matières particulaires vaporisées à partir des moyens de recueil jusque dans les moyens de recueil de l'analyseur pour leur analyse.

**29.** Appareil selon la revendication 28, dans lequel les moyens destinés au chauffage comprennent des moyens destinés à chauffer les matières particulaires recueillies jusqu'à une température maîtrisable au-dessus de 160° C en fonction de la substance à détecter.

**30.** Appareil selon la revendication 29, dans lequel la température se situe entre 160 et 290° C.

**31.** Appareil selon l'une quelconque des revendications 28 à 30 et comprenant des moyens d'agitation pour la mise en agitation vigoureuse du conteneur afin de perturber les matières particulaires présentes sur les surfaces du conteneur.

**32.** Appareil selon la revendication 31, dans lequel les moyens d'agitation comprennent un convoyeur ou transporteur.

**33.** Appareil selon l'une quelconque des revendications 28 à 32 dans lequel l'analyseur comprend une chambre ionisante, des moyens pour l'acheminement de la vapeur libérée conjointement avec un gaz porteur jusque dans la chambre ionisante, des moyens destinés à former des ions à partir de la vapeur libérée, une chambre sous vide, une chambre à rideau de gaz entre la chambre ionisante et la chambre sous vide, des moyens destinés à conduire ces ions par un premier orifice jusque dans la chambre à rideau de gaz et par un second orifice à partir de la chambre à rideau de gaz jusque dans la chambre sous vide, des moyens destinés à provoquer la diffusion du gaz dans la chambre à rideau de gaz à partir du contre-courant du premier orifice jusqu'à l'écoulement des ions pour empêcher que les matières particulaires entraînées dans la vapeur libérée ne viennent obstruer les orifices, et un analyseur de masses dans la chambre sous vide pour analyser ces ions.

**Ansprüche**

1.  Verfahren zum Entdecken einer versteckten und verpackten Schmuggelsubstanz im Inhalt eines Behälters oder Containers, wobei die Substanz von der Art ist, die Partikel dieser Substanz emittiert, wobei das Verfahren die folgenden Schritte aufweist:

    (1) Sicherstellen, daß wenigstens einige der Partikel, die an Oberflächen in dem Behälter vorliegen, angeregt wurden, um wenigstens einige solcher Partikel zu unterstützen, schwebend zu werden,

    (2) Ansaugen von Luft, die diese Partikel enthält aus dem Container und dabei Sammeln von wenigstens einiger dieser Partikel, wobei dieses Sammeln ohne Aufheizung dieser Partikel erfolgt, was ausreicht, Dampf aus der Substanz frei werden zu lassen,

    (3) sodann nach Sammeln der Partikel Aufheizen der gesammelten Partikel, was ausreicht, diese Partikel der Substanz zu verdampfen, um davon Dampf zu erzeugen, und

    (4) Analysieren des Dampfes dieser Schmuggelsubstanz.

2.  Verfahren nach Anspruch 1, wobei der Behälter ein Frachttransportcontainer ist.

3.  Verfahren nach Anspruch 1 oder 2, wobei dieses Inanregungversetzen durchgeführt wird durch Richten eines Luftstroms in den Container.

4.  Verfahren nach Anspruch 3, wobei der Schritt des Inanregungversetzens durchgeführt wird durch Blasen des Luftstromes durch die Ansaugleitung in den Container.

5.  Verfahren nach Anspruch 1 oder 2, wobei dieses Inanregungsversetzen durchgeführt wird durch Fallenlassen des Containers über einen kurzen Weg.

6.  Verfahren nach Anspruch 1 oder 2, wobei das Inanregungversetzen durchgeführt wird durch Verbinden eines Schwingungsübertragers mit dem Container.

7.  Verfahren nach Anspruch 6, wobei der Übertrager ein Ultraschallübertrager ist.

8.  Verfahren nach Anspruch 1 oder 2, wobei der Anregungsschritt durchgeführt wird durch Anregen des Containers auf einem Förderer, der gleichzeitig den Container transportiert.

9.  Verfahren nach einem der Ansprüche 1 bis 8, wobei der Container eine Türe an einem Ende aufweist und wobei der Schritt des Luftansaugens an einem Ort durchgeführt wird, der von diesem einen Ende entfernt ist.

10. Verfahren nach einem der Ansprüche 1 bis 9, wobei Luft in den Container an einem Ort eingeblasen wird und der Schritt des Absaugens von Luft an einem von dem ersten Ort entfernten Ort durchgeführt wird.

11. Verfahren nach Anspruch 2, wobei der Schritt des Luftansaugens durchgeführt wird durch Einführen einer Saugleitung in den Container, die eine Mehrzahl von Armen an ihrem Ende aufweist, so daß Luft in dem Container von einer Mehrzahl von verschiedenen Richtungen in die Musterungsleitung abgesaugt wird.

12. Verfahren nach einem der Ansprüche 1 bis 11, wobei der Sammlungsschritt den Schritt des Richtens von Luft von dem Container aus über eine klebende Sammleroberfläche umfaßt, um die Partikel auf dieser Oberfläche einzufangen.

13. Verfahren nach Anspruch 12, wobei der Schritt des Heizens den Schritt des Heizens der Sammleroberfläche umfaßt.

14. Verfahren nach Anspruch 1, wobei der Schritt des Ansaugens von Luft durchgeführt wird durch Ansaugen von Luft bei einer sehr hohen Flußrate durch eine lange Saugleitung, wobei die Saugleitung im wesentlichen keine Biegungen aufweist, die einen Radius geringer als ungefähr fünf mal dem inneren Durchmesser der Leitung aufweist, und die Saugleitung keine Zunahme des inneren Durchmessers darin aufweist bei einer Rate, die größer ist als ungefähr ein $7°$ Halbwinkelkonus, und eine innere Oberflächenrauhheit aufweist, die den inneren Durchmesser der Leitung nicht um 1 % übersteigt.

15. Verfahren nach Anspruch 14, wobei die Leitung wenigstens ungefähr 10 m in ihrer Länge beträgt.

16. Verfahren nach einem der Ansprüche 1 bis 15, wobei die Schmuggelsubstanz Heroin ist.

17. Verfahren nach einem der Ansprüche 1 bis 15, wobei die Schmuggelsubstanz Kokain ist.

18. Verfahren nach einem der Ansprüche 1 bis 15, wobei die Schmuggelsubstanz Canabissubstanz ist.

19. Verfahren nach einem der Ansprüche 1 bis 15, wobei die Schmuggelsubstanz eine explosive Substanz ist.

20. Verfahren nach Anspruch 2, wobei der Container auf einem Förderer in eine Hochenergieröntgenstrahlungs-Untersuchungseinrichtung gebracht wird und die Anregung durch den Förderer erfolgt.

21. Verfahren nach einem der vorhergehenden Ansprüche, wobei der Schritt (4) durchgeführt wird durch Fließenlassen des freigesetzten Dampfes, zusammen mit einem Trägergas in eine Ionisierungskammer, Bilden von Ionen von dem freigesetzten Dampf, Leiten dieser Ionen durch eine erste Öffnung und durch einen Gasvorhang und durch eine zweite Öffnung in eine Vakuumkammer, die eine Massenanalysiereinrichtung aufweist und Verursachen, daß der Gasvorhang von der ersten Öffnung im Gegenstrom zu dem Strom der Ionen abstrahlt, um zu verhindern, daß Partikel, die in dem freigesetzten Dampf und dem Trägergas mitgerissen werden, die Öffnung verstopfen.

22. Verfahren nach einem der vorhergehenden Ansprüche, wobei in dem Schritt (3) die gesammelten Partikel auf eine Temperatur aufgeheizt werden, die oberhalb von 160° C liegt.

23. Verfahren nach Anspruch 22, wobei die Substanz Heroin-Hydrochlorid ist und wobei in dem Schritt (3) die gesammelten Partikel auf eine Temperatur zwischen 260 und 290° C aufgeheizt werden.

24. Verfahren nach Anspruch 22, wobei die Substanz gewählt wird aus der Gruppe bestehend aus Kokain-Hydrochlorid, Methamphetamin-Hydrochlorid, Tetrahydrocanabinol und dem explosiven Kunststoff, bekannt als RDX, und wobei im Schritt 3 die gesammelten Partikel auf eine Temperatur zwischen 235 und 265° C aufgeheizt werden.

25. Verfahren nach Anspruch 22, wobei die Substanz Nitroglycerin ist und in dem Schritt 3 die gesammelten Partikel auf eine Temperatur zwischen 160 und 190° C aufgeheizt werden.

26. Verfahren nach Anspruch 22, wobei die Substanz Trinitrotoluol ist und im Schritt 3 die gesammelten Partikel auf eine Temperatur von zwischen 185 und 250° C aufgeheizt werden.

27. Verfahren nach Anspruch 22, wobei die Substanz Pentaerythrittetranitrat ist und in Schritt 3 die gesammelten Partikel auf eine Temperatur von zwischen 210 und 240° C aufgeheizt werden.

28. Vorrichtung zum Erfassen von versteckten und verpackten Substanzen in den Inhalten eines Behälters oder Containers, wobei die Substanz von der Art ist die Partikel aussendet, wobei die Vorrichtung aufweist:
    (1) eine Einrichtung, die geeignet ist, mit dem Behälter verbunden zu werden zum Anregen wenigstens einiger der Partikel, die auf Oberflächen in dem Behälter vorliegen, um hervorzurufen, daß wenigstens einige der Partikel schwebend werden,
    (2) Sammeleinrichtungen zum Sammeln der Partikel,
    (3) eine Einrichtung, die eine Saugleitung umfaßt, die mit der Sammeleinrichtung verbunden ist, um Luft anzusaugen, die die Partikel in dem Behälter enthält, in die Sammeleinrichtung, um wenigstens einige der Partikel aus dem Behälter in der Sammeleinrichtung zu sammeln,
    (4) eine Einrichtung, die mit der Sammeleinrichtung verbunden ist und betätigbar ist, um schnell die Partikel nach deren Sammeln aufzuheizen, um diese Partikel zu verdampfen,
    (5) eine Analysiereinrichtung zum Analysieren der Dämpfe,

(6) und eine Einrichtung, die die Sammeleinrichtung mit der Analysiereinrichtung verbindet, zum Fördern von Dämpfen der verdampften Partikel aus der Sammeleinrichtung in die Sammeleinrichtung in die Analysiereinrichtung zu deren Analyse.

29. Vorrichtung nach Anspruch 28, wobei die Einrichtung zum Heizen eine Einrichtung zum Heizen der gesammelten Partikel auf eine steuerbare Temperatur oberhalb von 160°C umfaßt, abhängig von der zu erfassenden bzw. entdeckenden Substanz.

30. Vorrichtung nach Anspruch 29, wobei diese Temperatur zwischen 160° und 290°C beträgt.

31. Vorrichtung nach einem der Ansprüche 28 bis 30, umfassend eine Anregungseinrichtung zum kräftigen Anregen bzw. Schütteln des Behälters, um Partikel, die sich auf Oberflächen in dem Behälter befinden zu stören.

32. Vorrichtung nach Anspruch 31, wobei diese Anregungs- bzw. Schütteleinrichtung ein Förderband umfaßt.

33. Vorrichtung nach einem der Ansprüche 28 bis 32, wobei die Analysiereinrichtung eine Ionisierungskammer, eine Einrichtung zum Bewegen bzw. Fließenlassen des freigesetzten Dampfes zusammen mit einem Trägergas in die Ionisierungskammer, eine Einrichtung zum Bilden von Ionen aus dem freigesetzten Dampf, eine Vakuumkammer, eine Gasvorhangkammer zwischen der Ionisierungskammer und der Vakuumkammer, eine Einrichtung zum Leiten dieser Ionen durch eine erste Öffnung in die Gasvorhangkammer und durch eine zweite Öffnung von der Gasvorhangkammer in die Vakuumkammer, eine Einrichtung zum Bewirken, daß das Gas in der Gasvorhangkammer von der ersten Öffnung abstrahlt im Gegenstrom zu dem Fluß der Ionen, um zu verhindern, daß in dem freigesetzten Dampf mitgerissene Partikel die Öffnungen verstopfen und einen Massenanalysierer in der Vakuumkammer aufweist zum Analysieren der Ionen.

EP 0 169 057 B1

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13